(19) Europäisches Patentamt
European Patent Office
Office européen des brevets

(11) EP 4 343 045 A1

(12) EUROPEAN PATENT APPLICATION
published in accordance with Art. 153(4) EPC

(43) Date of publication:
**27.03.2024 Bulletin 2024/13**

(21) Application number: **22797618.0**

(22) Date of filing: **09.05.2022**

(51) International Patent Classification (IPC):
***D06B 1/00*** *(2006.01)* ***D06L 1/00*** *(2017.01)*
***D06M 15/07*** *(2006.01)*

(52) Cooperative Patent Classification (CPC):
**D06B 1/00; D06L 1/00; D06M 11/00; D06M 15/07;**
Y02P 70/62

(86) International application number:
**PCT/JP2022/019650**

(87) International publication number:
**WO 2022/244634 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2021 JP 2021084556**

(71) Applicants:
- **Izawa Towel Co., Ltd.**
  **Tokyo 150-0021 (JP)**
- **National University Corporation**
  **Kyoto Institute of Technology**
  **Sakyo-ku**
  **Kyoto-shi, Kyoto 606-8585 (JP)**

(72) Inventors:
- **IZAWA Shoji**
  **Tokyo, 1500021 (JP)**
- **OKUBAYASHI Satoko**
  **Kyoto-shi, Kyoto 6068585 (JP)**

(74) Representative: **Mewburn Ellis LLP**
**Aurora Building**
**Counterslip**
**Bristol BS1 6BX (GB)**

# (54) METHOD FOR APPLYING GLUE TO FIBER PRODUCT, METHOD FOR PRODUCING FIBER PRODUCT WITH GLUE, METHOD FOR REMOVING GLUE FROM FIBER PRODUCT WITH GLUE, AND METHOD FOR PRODUCING FIBER PRODUCT FROM FIBER PRODUCT WITH GLUE

(57) An object of the present invention is to realize an environment-friendly manufacturing process for textile products that solves the problem of wastewater by using a solvent instead of conventionally used water in a sizing process and/or desizing process of textile products. According to an aspect of the present invention, there is provided a method for applying a sizing agent to a textile product, the method including: a step of sizing the textile product by bringing the textile product into contact with a fluid containing the sizing agent and supercritical carbon dioxide.



Processed by Luminess, 75001 PARIS (FR)

## Description

## Technical Field

The present invention relates to a method for applying a sizing agent to a textile product, a method for manufacturing a sizing-applied textile product, a method for removing a sizing agent from a sizing-applied textile product, and a method for manufacturing a textile product from a sizing-applied textile product.

## Background Art

In general, cotton fabrics are made by interlacing warp and weft threads. Here, the process of making fabrics, first, begins with dividing grey yarns into warp and weft threads. Grey yarns divided into warp and weft threads go through various processes. Finally, the warp and weft threads are put on a loom, and the finished fabric is inspected and sent to the finishing process. The main processes of manufacturing cotton products are spinning, sizing, weaving, desizing/scouring/bleaching, dyeing, and finishing. Among these processes, in each of the sizing, desizing/scouring, and dyeing processes, a large amount of water is used, and at the same time, a large amount of wastewater is discharged. It is said that 20% of the world's wastewater is discharged from the manufacturing of clothes. As reducing the burden on the environment has become a major issue worldwide, there is a need for an environment-friendly manufacturing process that solves these wastewater problems.

Use of supercritical carbon dioxide for textile processing is also known. A supercritical state is expressed as a state exceeding the critical temperature (Tc) and critical pressure (Tp) unique to each compound. A compound in this state is called a supercritical fluid, which has intermediate properties between gas and liquid. As shown in Fig. 1, carbon dioxide has a Tc of 31.1°C and a Tp of 7.38 MPa, and can express a supercritical state under relatively mild conditions, and therefore has advantages of being non-explosive, non-toxic, highly safe, inexpensive and readily available. In addition, the supercritical carbon dioxide has the following properties: (1) the density changes significantly when the pressure is slightly changed near the critical temperature; (2) transport properties are excellent and penetrability into substances is high due to low viscosity and high diffusivity; (3) thermal conductivity is high and a heat transfer rate is high, (4) a reaction rate is faster due to a solvation effect; (5) supercritical carbon dioxide can be used as a favorable solvent for nonpolar organic substances because the dielectric constant is smaller than that of water and approximately the same as that of ordinary nonpolar organic solvents; and (6) carbon dioxide can be recycled.

## Summary

### Technical Problem

As described above, it is desired to realize an environment-friendly manufacturing process for textile products that solves the problem of wastewater by using a solvent instead of conventionally used water in the sizing process and/or desizing process of textile products.

An object of the present invention is to realize an environment-friendly manufacturing process for textile products that solves the problem of wastewater by using a solvent instead of conventionally used water in the sizing process and/or desizing process of textile products.

### Solution to Problem

As a result of intensive research to solve the above problems, the present inventors have found that the above problems can be solved by using carbon dioxide in a supercritical state as a solvent instead of conventionally used water, and have completed the present invention. From the above properties (1) to (5) of supercritical carbon dioxide, by using supercritical carbon dioxide as a solvent in the sizing process and/or the desizing process, a manufacturing process that does not use water and does not generate wastewater can be realized.

Specific aspects of the present invention are as follows.

[1] A method for applying a sizing agent to a textile product, the method including a step of sizing the textile product by bringing the textile product into contact with a fluid containing the sizing agent and supercritical carbon dioxide.

[2] A method for manufacturing a sizing-applied textile product, the method including a step of sizing the textile product by bringing the textile product into contact with a fluid containing a sizing agent and supercritical carbon dioxide.

[3] A method for removing a sizing agent from a sizing-applied textile product, the method including a step of desizing the sizing-applied textile product by bringing the sizing-applied textile product into contact with a fluid containing supercritical carbon dioxide.

[4] A method for manufacturing a textile product from a sizing-applied textile product, the method including a step of desizing the sizing-applied textile product by bringing the sizing-applied textile product into contact with a fluid containing supercritical carbon dioxide.

[5] The method according to any one of [1] to [4], in which the sizing agent contains cellulose acetate.

[6] The method according to any one of [1] to [5], wherein the fluid further contains a cosolvent.

[7] The method according to [6], in which the cosolvent contains acetone.

[8] The method according to any one of [1] to [7], in which the textile product contains cotton threads.

[9] The method according to [3] or [4], in which the step of desizing includes bringing metal balls into contact with the sizing-applied textile product.

[10] The method according to [3], [4], or [9], in which the step of desizing is batch processing or continuous processing.

Advantageous Effects of Invention

The method according to the present invention can realize an environment-friendly manufacturing process for textile products that solves the problem of wastewater by using a solvent instead of conventionally used water in a sizing process and/or desizing process of textile products.

**Brief Description of Drawings**

Fig. 1 is a temperature-pressure phase diagram of carbon dioxide.

Fig. 2(a) is a photograph related to a high-pressure container, and Fig. 2(b) is a photograph related to a high-pressure container set in an oven.

Fig. 3 is a diagram showing an outline of an apparatus used in embodiments.

Fig. 4 is an SEM image of a cotton thread to which no sizing agent is attached.

Fig. 5 is an SEM image of a cotton thread to which approximately 3% starch paste is attached.

Fig. 6 is an SEM image of a cotton thread to which 10.0% cellulose acetate is attached.

Fig. 7 is an SS curve of a cotton thread to which no sizing agent is attached.

Fig. 8 is an SS curve of a cotton thread to which starch paste is attached.

Fig. 9 is an SS curve of a cotton thread to which cellulose acetate (manufactured by Sigma-Aldrich) is attached.

Fig. 10 is a graph comparing each of the SS curves of the cotton threads shown in Figs 7 to 9.

**Description of Embodiments**

In this specification, when a numerical range is expressed using "X to Y," the range includes the numerical values at both ends.

Hereinafter, a method for applying a sizing agent to a textile product, a method for manufacturing a sizing-applied textile product, a method for removing a sizing agent from a sizing-applied textile product, and a method for

manufacturing a textile product from a sizing-applied textile product according to the present invention will be described.

[Method for Applying Sizing Agent to Textile Product and Method for Manufacturing Sizing-applied Textile Product]

According to one embodiment of the present specification, there is provided a method for applying a sizing agent to a textile product, including: a step of sizing the textile product by bringing the textile product into contact with a fluid containing the sizing agent and supercritical carbon dioxide.

In addition, according to another embodiment of the present specification, there is provided a method for manufacturing a sizing-applied textile product, including: a step of sizing the textile product by bringing the textile product into contact with a fluid containing a sizing agent and supercritical carbon dioxide.

In the present embodiment, the textile product is not particularly limited, and includes fibers, threads, fabrics, and the like. Examples of fibers include tows and the like that have not been made into threads. Threads are not particularly limited, and examples thereof include spun threads, filament threads, blended twisted threads or blended threads obtained by mixing and twisting these threads together, and the like. Examples of fabrics include woven fabrics and knitted fabrics using threads, non-woven fabrics, felts, and the like. In the method of the present embodiment, it is preferable to use threads as the textile product, and in this case, the sizing-applied thread obtained by the method can be subjected to the subsequent weaving process.

The type of thread is not particularly limited, and examples thereof include natural fibers such as vegetable fibers (for example, cotton and linen), and animal fibers such as silk and wool, synthetic fibers such as polyester and acrylic, semisynthetic fibers such as acetate, triacetate, and promix, and chemical fibers such as regenerated fibers (for example, rayon, polynosic, cupra, and lyocell), and inorganic fibers (for example, glass fibers, metal fibers, and carbon fibers). Two or more of these threads may be blended or twisted together. These threads may be single threads, two-ply threads, triple threads, or twisted threads of four or more threads.

In the present embodiment, it is preferable to use cotton threads from the viewpoint of feel as a towel.

In the present embodiment, the sizing agent is not particularly limited, examples thereof include cellulose acetate, polymethyl methacrylate, polyethylene glycol, polyvinyl acetate, polystyrene, and the like, and one or a combination of two or more of these sizing agents can be used. From the viewpoint of solubility in supercritical carbon dioxide, the sizing agent is preferably cellulose acetate.

In a case where the sizing agent contains cellulose acetate, the viscosity of cellulose acetate is preferably $30 \times 10^{-3}$ to $200 \times 10^{-3}$ Pa s, and can be set to $40 \times 10^{-3}$ to $150 \times 10^{-3}$ Pa·s, from the viewpoint of solubility in supercritical carbon dioxide. The viscosity of cellulose acetate can be measured using an Ostwald viscometer at 25°C.

In a case where the sizing agent contains cellulose acetate, the acetylation degree of cellulose acetate is preferably 55 to 62.5%. The acetylation degree of cellulose acetate can be measured, for example, by an alkaline saponification method (ASTM: D-817-91).

In the present embodiment, the treatment conditions when the fluid containing the sizing agent and supercritical carbon dioxide is brought into contact with the textile product are not particularly limited, and from the viewpoint of improving the sizing properties, a condition in which the temperature is 31 to 150°C, the pressure is 8 to 25 MPa, and the time is 30 to 800 minutes can be used.

The process of bringing the textile product into contact with the fluid containing the sizing agent and supercritical carbon dioxide can be batch processing.

The amount of sizing agent used is not particularly limited, and for example, in a case where cotton threads are used as textile products, from the viewpoint of improving sizing properties, it is preferable to use 1 to 5 g of sizing agent per 1 g of cotton threads.

In the present embodiment, the fluid containing the sizing agent and supercritical carbon dioxide may be made by placing the sizing agent into a treatment container in advance and feeding the supercritical carbon dioxide into the treatment container.

In the present embodiment, the fluid containing the sizing agent and supercritical carbon dioxide may further contain a cosolvent. By including a cosolvent in the fluid, the solubility of the sizing agent in the solvent (including the supercritical carbon dioxide and cosolvent) can be improved, and the sizing properties can be improved.

As the cosolvent, acetone is preferable from the viewpoint of improving the solubility of the sizing agent in the solvent (including the supercritical carbon dioxide and cosolvent) and improving the sizing properties.

In the present embodiment, in a case where a cosolvent is used, the cosolvent can be fed into the treatment container separately from the supercritical carbon dioxide.

In a case where a cosolvent is used, the ratio (% by mol) of the cosolvent to supercritical carbon dioxide is not particularly limited, and from the viewpoint of improving the solubility of the sizing agent in the solvent and improving the sizing properties, the ratio is preferably 5 to 15% by mol.

In the present embodiment, the adhesion rate (%) of the sizing agent in the sizing-applied textile product is not particularly limited, and may be 0.1 to 100%. The adhesionrate (%) of the sizing agent can be calculated based on Formula (2) described in (4-1) of Example 2 below.

**The** sizing-applied textile product obtained by the method of the present embodiment can show high tensile strength. In addition, the sizing-applied textile product has high resistance to friction, and the tensile strength is not likely to decrease even after a friction test.

The method of the present embodiment can be used as a sizing process, which is one process of textile processing, and can also be used in combination with each process such as spinning, weaving, desizing/scouring/bleaching, dyeing, and finishing, which are other processes of textile processing. In addition, the method for applying a sizing agent to a textile product or the method for manufacturing a sizing-applied textile product according to the present embodiment can also be one method or a manufacturing method in combination with a method for removing a sizing agent from a sizing-applied textile product or a method for manufacturing a textile product from a sizing-applied textile product, which will be described later.

[Method for Removing Sizing Agent from Sizing-applied Textile Product and Method for Manufacturing Textile Product from Sizing-applied Textile Product]

According to one embodiment of the present specification, there is provided a method for removing a sizing agent from a sizing-applied textile product, including: a step of desizing the sizing-applied textile product by bringing the sizing-applied textile product into contact with a fluid containing supercritical carbon dioxide.

In addition, according to another embodiment of the present specification, there is provided a method for manufacturing a textile product from a sizing-applied textile product, including: a step of desizing the sizing-applied textile product by bringing the sizing-applied textile product into contact with a fluid containing supercritical carbon dioxide.

In the present embodiment, as the textile product, those described in the above [Method for Applying Sizing Agent to Textile Product and Method for Manufacturing Sizing-applied Textile Product] can be used.

In the present embodiment, it is preferable to use cotton threads from the viewpoint of touch as a towel.

In the present embodiment, the sizing agent is not particularly limited, and those described in the above [Method for Applying Sizing Agent to Textile Product and Method for Manufacturing Sizing-applied Textile Product] can be used. From the viewpoint of solubility in supercritical carbon dioxide, the sizing agent is preferably cellulose acetate.

In a case where the sizing agent contains cellulose acetate, the viscosity of cellulose acetate may be within the numerical range described in the above [Method for Applying Sizing Agent to Textile Product and Method for Manufacturing Sizing-applied Textile Product].

In the present embodiment, the sizing-applied textile product is not particularly limited, and those obtained by the above [Method for Applying Sizing Agent to Textile Product and Method for Manufacturing Sizing-applied Textile Product] can be used.

In the present embodiment, the treatment conditions when the fluid containing the supercritical carbon dioxide is brought into contact with the sizing-applied textile product are not particularly limited, and from the viewpoint of improving the desizing properties, a condition in which the temperature is 31 to 150°C, the pressure is 8 to 25 MPa, and the time is 30 to 800 minutes can be used.

In the present embodiment, the desizing process may be batch processing or continuous processing.

In the present embodiment, the fluid containing the supercritical carbon dioxide may further contain a cosolvent. By including a cosolvent in the fluid, the solubility of the sizing agent in the solvent (including the supercritical carbon dioxide and cosolvent) can be improved, and the desizing properties can be improved.

The cosolvent is not particularly limited, and those described in the above [Method for Applying Sizing Agent to Textile Product and Method for Manufacturing Sizing-applied Textile Product] can be used. As the cosolvent, acetone is preferable from the viewpoint of improving the solubility of the sizing agent in the solvent (including the supercritical carbon dioxide and cosolvent) and improving the desizing properties.

In the present embodiment, in a case where a cosolvent is used, the cosolvent can be fed into the treatment container separately from the supercritical carbon dioxide.

In the present embodiment, in a case where the desizing process is performed by batch processing and a cosolvent is used, the ratio (% by mol) of the cosolvent to supercritical carbon dioxide is not particularly limited, and from the viewpoint of improving the solubility of the sizing agent in the solvent and improving the desizing properties, the ratio is preferably 5 to 15% by mol.

In the present embodiment, in a case where the desizing process is performed by continuous processing, the flow rate of the supercritical carbon dioxide to the treatment container is not particularly limited, and from the viewpoint of improving solubility of the sizing agent in the solvent and improving the desizing properties, the flow rate is preferably 50 ml to 2000 ml per 1 g of fiber, and more preferably 100 ml to 1500 ml.

In the present embodiment, in a case where the desizing process is a continuous processing and a cosolvent is used, the flow rate of the cosolvent to the treatment container is not particularly limited, and is preferably 1 ml to 500 ml per 1 g of fiber, and is more preferably 10 ml to 400 ml.

**The** removal rate (%) of the sizing agent after desizing by the method of the present embodiment is not particularly

limited, and can be 1 to 99% or the like. The removal rate (%) of the sizing agent can be calculated based on Formula (3) described in (4) of Example 3 below.

In the present embodiment, the desizing process can include bringing the metal balls into contact with the sizing-applied textile product. The desizing properties can be improved by bringing the metal balls into contact with the sizing-applied textile product. The material of the metal ball is not particularly limited, and stainless steel, steel, titanium, and the like can be used, and among these, stainless steel is preferable.

Further, in the present embodiment, in a case where the sizing-applied textile product is supported by a member such as a stand made of wire in the treatment container, by removing the member, it becomes easier to bring the sizing-applied textile product into contact with a fluid containing the supercritical carbon dioxide, and the desizing properties can be improved.

The method of the present embodiment can be used as a desizing process, which is one process of textile processing, and can also be used in combination with each process such as spinning, weaving, sizing, scouring/bleaching, dyeing, and finishing, which are other processes of textile processing. Further, the method for removing the sizing agent from the sizing-applied textile product or the method for manufacturing the textile product from the sizing-applied textile product according to the present embodiment can also be one method or a manufacturing method in combination with the method for applying a sizing agent to the textile product or the method for manufacturing the sizing-applied textile product, which were described above.

The present invention will be specifically described below with reference to examples, but the present invention is not limited to the content described in the examples.

## Examples

### (Example 1: Solubility Test of Various Polymers in Supercritical Carbon Dioxide)

#### (1) Sizing Agent (Polymer)

Conventionally, starch paste and polyvinyl alcohol are typical examples of sizing agents used in the manufacturing process for cotton products and the like. These sizing agents are hydrophilic polymers and are used by dissolving them in water. However, carbon dioxide is a nonpolar substance and shows the properties of dissolving hydrophobic polymers. Therefore, for sizing using supercritical carbon dioxide, it is preferable to use a sizing agent showing hydrophobicity and high solubility in carbon dioxide.

Here, as polymers showing hydrophobicity and showing a structure similar to conventionally used starch paste, polymethyl methacrylate, polyethylene glycol, polyvinyl acetate, celluloses acetate, and polystyrene were prepared. Also, polyvinyl alcohol was prepared as a conventionally used sizing agent (polymer). Details of these polymers are shown in Table 1 below.

[Table 1]

| Sample | Structure | Company | Molecular weight |
|---|---|---|---|
| Polymethyl methacrylate | 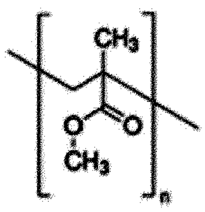 | Nacalai Tesque Inc. | 8000 (n) |
| Polyethylene glycol | 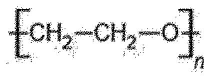 | Nacalai Tesque Inc. | 950 - 1050 (MW) |
| Polyvinyl alcohol | 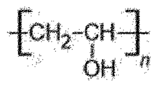 | Nacalai Tesque Inc. | 500 (n) |

(continued)

| Sample | Structure | Company | Molecular weight |
|---|---|---|---|
| Polyvinyl acetate | 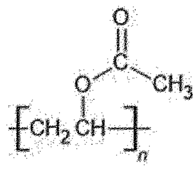 | Alfa Aesar | 50000 (MW) |
| Cellulose acetate | 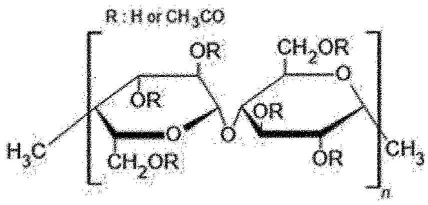 | Sigma-Aldrich | - 30000 (Mn) |
| Polystyrene | 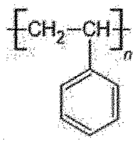 | Polysciences Inc. | 800 - 5000 (MW) |
| * n in the table indicated the polymerization degree (for example. 800 (n) is the polymerization degree of 800), MW: weight average molecular weight, Mn: number average molecular weight | | | |

(2) Apparatus and Reagents

Figs. 2 and 3 show an apparatus used in the solubility test in supercritical carbon dioxide. Fig. 2(a) is a photograph showing a high-pressure container (EV-3-50-2/4 manufactured by JASCO Corporation, content 50 ml), and Fig. 2(b) is a photograph showing the high-pressure container set in an oven SCF-Sro manufactured by JASCO Corporation, respectively. Fig. 3 is a diagram showing an overview of the entire apparatus.

A liquid-feeding pump (PU-2086 Intelligent HPLC pump manufactured by JASCO Corporation) for feeding carbon dioxide and a liquid-feeding pump (PU-2080 Intelligent HPLC pump manufactured by JASCO Corporation) for feeding acetone were attached to the high-pressure container. A cooling head was attached to the liquid-feeding pump for feeding carbon dioxide, and the carbon dioxide was kept in the liquid phase by passing a refrigerant of -10°C or lower. In addition, a fully automatic pressure control valve BP-2080 manufactured by JASCO Corporation was attached to the pressure release unit of the high-pressure container, and the pressure in the high-pressure container and the speed of releasing carbon dioxide were adjusted and kept constant.

A liquefied carbon dioxide cylinder (Kind Gas Co., Ltd., purity of 99.5% or higher) was used as a carbon dioxide supply source.

(3) Operation and Evaluation Procedures

Approximately 1 g of each polymer listed in Table(1) above was weighed and placed in a cylindrical glass filter (ADVANTEC 88R) to prepare each sample. A high-pressure container was preheated to 100°C, and each prepared sample was placed in the high-pressure container. Next, carbon dioxide was fed to the high-pressure container using a liquid-feeding pump, and the inside of the high-pressure container was pressurized. The conditions for treating each sample with supercritical carbon dioxide fluid were set to the pressure of 20 MPa, the temperature of 100°C, the time of 180 minutes, and a batch type, and the treatment was performed while stirring the inside of the high-pressure container with a magnetic stirrer. After treatment with the supercritical carbon dioxide fluid, the valve of the high-pressure vessel was opened and the pressure was released to atmospheric pressure. After the pressure of the high-pressure container was released, each sample was removed and weighed again.

After that, by weighing the weights (g) of the glass filter containing the polymer respectively before and after the treatment with the supercritical carbon dioxide fluid, and by subtracting the weight (g) of the glass filter from the weight, the weight (g) of the polymer before treatment with the supercritical carbon dioxide fluid and the weight (g) of the polymer after treatment with the supercritical carbon dioxide fluid were calculated respectively. Then, the solubility of each polymer in supercritical carbon dioxide was calculated based on the following Formula (1).

[Math. 1]

$$\text{Solubility (\%)} = \{(\text{Weight before treatment} - \text{Weight after treatment})/\text{Weight before treatment}\} \times 100 \quad (1)$$

(4) Evaluation Results

Table 2 shows the results of the solubility of each polymer in supercritical carbon dioxide calculated in (3) above.

[Table 2]

| No. | Sample | Solubility (%) |
|---|---|---|
| 1 | Polymethyl methacrylate | 2.5 |
| 2 | Polyethylene glycol | 0.2 |
| 3 | Polyvinyl alcohol | -0.7 |
| 4 | Polyvinyl acetate | 0.9 |
| 5 | Cellulose acetate | 19.5 |
| 6 | Polystyrene | 1.6 |

**As** shown in Table 2, cellulose acetate had the highest solubility, showing a solubility value of 19.5%. The reason why cellulose acetate shows higher solubility in supercritical carbon dioxide than other polymers is considered to be due to the large effect of the acetyl groups in the side chains of cellulose acetate. Cellulose acetate has acetylated hydroxy groups, has many acetyl groups, and has low polarity. Such a difference in the polarity of the functional groups is considered to have contributed to the high solubility of cellulose acetate in supercritical carbon dioxide, which is a nonpolar solvent.

From the above results, it was found that cellulose acetate is a preferable sizing agent when sizing with supercritical carbon dioxide.

(Example 2: Sizing Using Supercritical Carbon Dioxide)

(1) Sizing Agent (Polymer)

As the sizing agent (polymer), cellulose acetate, which showed high solubility in supercritical carbon dioxide in Example 1 above, was used. As the cellulose acetate, the same cellulose acetate manufactured by Sigma-Aldrich as in Example 1 was used. The cellulose acetates used are shown in Table 3 below.

[Table 3]

| No. | Sample | Company | Acetylation degree (%) |
|---|---|---|---|
| 1 | Cellulose acetate | Sigma-Aldrich | 56 |

In addition, the structural formula of cellulose acetate is shown below.

[C1]

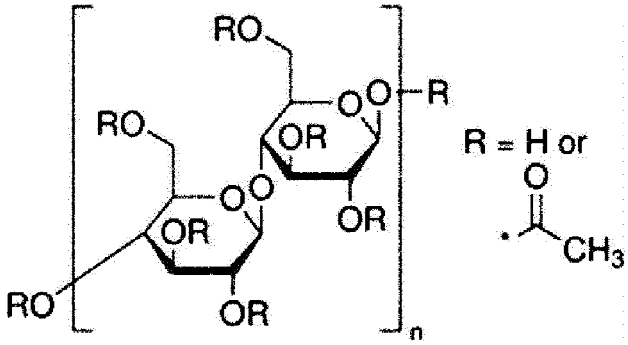

(2) Apparatus and Reagents

The same apparatus and carbon dioxide supply source as in Example 1 above was used.

(3) Operation Procedure

A high-pressure container was preheated to 40°C, and each weight (g) of cellulose acetate shown in Table 4 below was placed in the high-pressure container. In addition, a predetermined amount of acetone, which is a cosolvent, was fed into the high-pressure container in a manner such that the ratio (% by mol) of acetone to supercritical carbon dioxide was as shown in Table 4.

In addition, 0.175 g of scoured and bleached cotton thread (20 count, single thread) manufactured by IZAWA TOWEL CO., LTD. was weighed and dried at 105°C for 2 hours, and the dried cotton thread was weighed. The dried cotton thread was isolated with a stand made of wire not to come into contact with a stirring bar (stirrer tip), and placed in a high-pressure container. Next, carbon dioxide was fed to the high-pressure container using a liquid-feeding pump, and the inside of the high-pressure container was pressurized. As shown in Table 4, the conditions for treating each cotton thread with a supercritical carbon dioxide fluid were set to (40°C, 10 MPa) or (100°C, 20 MPa), the time of 30 minutes, and a batch type, and the treatment was performed while stirring the inside of a high-pressure container with a magnetic stirrer. After the treatment with the supercritical carbon dioxide fluid, the pressure of the high-pressure container was released to atmospheric pressure at a constant rate of 0.1 MPa/min. After releasing the pressure of the high-pressure container, each cotton thread was taken out and dried at 105°C for 2 hours, and each of the dried cotton threads was weighed.

(4) Evaluation

(4-1) Adhesion Rate of Sizing Agent

The weight (g) of the cotton thread before treatment (before sizing) with supercritical carbon dioxide fluid obtained as in (3) above and the weight (g) of the cotton thread after treatment (after sizing) with supercritical carbon dioxide fluid were used to calculate the adhesion rate (Sizing rate S) of cellulose acetate, which is a sizing agent, based on the following Formula (2).
[Math. 2]

$$\text{Sizing rate S (\%)} = \{(\text{Weight after treatment} - \text{Weight before treatment})/\text{Weight before treatment}\} \times 100 \qquad (2)$$

(4-2) Tensile Strength Test

In order to measure the strength of each cotton thread after sizing, a tensile test was performed according to the following procedure.

First, each cotton thread (length 20 cm) after sizing and cardboard (width 4 cm × length 23 cm) were prepared, and a sample for measurement was prepared by fixing the cotton thread to the cardboard in a manner such that the

length direction of the cotton thread matched the length direction of the cardboard and the cotton thread was stretched. After setting the prepared sample in the table-top precision universal testing machine AGS-J (manufactured by Shimadzu Corporation), the center part was cut and removed leaving both end parts (2 cm each) of the cardboard to obtain a cotton thread test piece having grip portions (both end parts of the cardboard). Then, a tensile test was performed on test pieces of each cotton thread under the condition of a tensile speed of 200 mm/min. The tensile test was performed 10 times with respect to one type of cotton thread after sizing, and the average value was calculated.

The tensile test was similarly performed with respect to cotton threads to which no sizing agent was attached and cotton threads to which approximately 3% by weight of starch paste was attached, and the average value was calculated.

(4-3) Observation by Scanning Electron Microscope

Using FINECOAT JFC-1100E (manufactured by JEOL, Ltd.), the surface of each cotton thread after sizing was treated for 1 minute to vapor-deposit 75 Å of gold, then FE-SEM JSM-7001F manufactured by JEOL Ltd. was used to observe the surface of each cotton thread after vapor deposition at an accelerating voltage of 1.5 kV.

(4-4) Friction Test

Abrasive paper (CW-C P1000) was wrapped around the roller to prepare a roller with abrasive paper.

A cotton thread (length 20 cm) after sizing and cardboard (width 4 cm × length 23 cm) were prepared, and a sample for measurement was prepared in which the cotton thread was fixed to the cardboard by the same procedure as in (4-2) above. For the prepared sample, the center part was cut and removed leaving both end parts (2 cm each) of the cardboard to obtain a cotton thread test piece having grip portions (both end parts of the cardboard).

The obtained test piece was set on the mat, and the center part (cotton thread part) of the test piece on the mat was reciprocated 100 times by a roller with abrasive paper to rub the cotton thread part. After the friction test, the cotton thread was set in a table-top precision universal testing machine AGS-J (manufactured by Shimadzu Corporation), and subjected to a tensile test under the same conditions as in (4-2) above. The tensile test was performed 10 times with respect to one type of cotton thread, and the average value was calculated.

Tables 4 and 5 show the evaluation results of (4-1) above.

[Table 4]

| Sample | Company | Temperature ("C) | Pressure (MPa) | Weight of sizing agent (g) | Ratio of cosolvent (acetone) (% by mol) | Sizing rate S (%) |
|---|---|---|---|---|---|---|
| Cellulose acetate | Sigma-Aldrich | 40 | 10 | 1.000 | 0 | 1.2 |
| Cellulose acetate | Sigma-Aldrich | 100 | 20 | 1.000 | 0 | 1.2 |
| Cellulose acetate | Sigma-Aldrich | 40 | 10 | 1.000 | 10 | 62.6 |
| Cellulose acetate | Sigma-Aldrich | 40 | 10 | 0.501 | 10 | 21.4 |
| Cellulose acetate | Sigma-Aldrich | 40 | 10 | 0.326 | 10 | 10.0 |
| Cellulose acetate | Sigma-Aldrich | 40 | 10 | 0.250 | 10 | 5.4 |
| Cellulose acetate | Sigma-Aldrich | 40 | 10 | 0.325 | 5 | 2.4 |
| Cellulose acetate | Sigma-Aldrich | 40 | 10 | 0.325 | 2.5 | 0.3 |

**As** shown in Table 4, when the weight of the sizing agent was 1.000 g and the content ratio of the acetone cosolvent was 0% by mol under both of the condition of 40°C and 10 MPa and the condition of 100°C and 20 MPa, the

adhesion rate of the sizing agent was 1.2%. From this result, it is considered that, when cellulose acetate is used as a sizing agent, the solubility of the sizing agent in supercritical carbon dioxide hardly increases even when the temperature and pressure are increased.

Further, as shown in Table 4, in a case where the acetone cosolvent was not added (content ratio of acetone is 0% by mol), the adhesion rate of the sizing agent was 1.2% (the weight of sizing agent is 1.000 g under the condition of 40°C and 10 MPa or 100°C and 20 MPa). In addition, without changing the weight, temperature, and pressure of the sizing agent (the weight of sizing agent was 1.000 g under the condition of 40°C and 10 MPa), when acetone was added to 10% by mol, the adhesion rate of the sizing agent was increased to 62.6%.

From these results, by adding acetone, which is soluble in cellulose acetate, as a cosolvent to supercritical carbon dioxide, which is a nearly nonpolar solvent, it is considered that, compared to a case of supercritical carbon dioxide alone, the solubility of the solvent in cellulose acetate is improved and the cellulose acetate becomes easier to dissolve in the solvent, and as a result, the sizing rate S of the sizing agent to the cotton thread increases.

Furthermore, as shown in Table 4, in a case where the condition of 40°C and 10 MPa was used, the content ratio of acetone was 10% by mol, and the weight of the sizing agent was changed (1.000, 0.501, 0.326, or 0.250 g), when the weight of the sizing agent was 1.000 g, the sizing rate S of the sizing agent reached the maximum value of 62.6%. In addition, when the weight of the sizing agent was 0.326 g, a cotton thread with a sizing rate S of 10.0% was obtained, and the texture of this cotton thread was similar to the texture of cotton thread to which approximately 3% starch paste was attached by the conventional method.

In addition, as shown in Table 4, in a case where the condition of 40°C and 10 MPa was used, the weight of the sizing agent was 0.326 or 0.325 g, and the content ratio of acetone was changed (10, 5, or 2.5% by mol), it was found that the sizing rate S decreased when the amount of acetone decreased. From this result, it is considered that the optimum content ratio of acetone, which is a cosolvent, is 10% by mol.

SEM images of the surfaces of cotton thread to which no sizing agent is attached, cotton thread to which approximately 3% starch paste is attached by the conventional method, and cotton thread to which 10.0% cellulose acetate is attached by sizing with supercritical carbon dioxide are respectively shown in Figs. 4 to 6. There was almost no difference between the cotton thread to which starch paste was attached (Fig. 5) and the cotton thread to which no sizing agent was attached (Fig. 4). On the other hand, in the cotton thread to which cellulose acetate was attached (Fig. 6), it was observed that the sizing agent was attached to the inside of the cotton thread. This is probably because supercritical carbon dioxide has a higher diffusivity than ordinary liquids such as water, and thus the cellulose acetate permeated into the fine parts of the cotton thread.

[Table 5]

| Sample | Company | Acetylation degree (%) | Ratio of cosolvent(acetone) (% by mol) | Sizing rate S (%) |
|---|---|---|---|---|
| Cellulose acetate | Sigma-Aldrich | 56 | 10 | 10.0 |
| Cellulose acetate | Sigma-Aldrich | 56 | 7 | 6.9 |

As shown in Table 5, in a case where 10% by mol of acetone was added, the sizing rate S was 10.0%. In addition, in a case where 7% by mol of acetone was added, the sizing rate S was 6.9%. Thus, in a case where 7% by mol of acetone was added, compared to a case where 10% by mol of acetone was added, the sizing rate S becomes lower, and it is considered that the content ratio of acetone is suitably 10% by mol.

Table 6 shows the evaluation results of (4-2) above. SS curves of each cotton thread are shown in Figs. 7 to 9. In addition, Fig. 10 shows a summary of the graphs closest to the average value for each SS curve.

[Table 6]

| Sample | Sizing rate S (%) | Tensile strength (average) (cN/dtex) |
|---|---|---|
| No sizing agent | 0 | 1.63 |
| Starch | 3 | 1.75 |
| Cellulose acetate (Sigma-Aldrich) | 17.7 | 1.94 |

From the results in Table 6, the tensile strength of the cotton thread to which starch paste was attached was 1.75 cN/dtex, which was higher than the tensile strength of the cotton thread to which no sizing agent was attached. In

addition, the cotton thread to which cellulose acetate was attached by supercritical carbon dioxide showed a higher tensile strength than the cotton thread to which starch paste was attached. From these results, it is considered that the cotton thread to which cellulose acetate is attached has cleared the reference tensile strength value, such as the tensile strength of the cotton thread to which starch paste is attached.

Furthermore, as shown in the graph of Fig. 10, regarding the Young's modulus, the cotton thread to which cellulose acetate was attached showed a high value, and the cotton thread to which starch paste was attached showed a low value. From this result, it was found that the cotton thread to which cellulose acetate was attached was harder than the cotton thread to which starch paste was attached.

Table 7 shows the evaluation results of (4-4) above.

[Table 7]

| Sample | Sizing rate S (%) | Tensile strength (average) (cN/dtex) |
|---|---|---|
| Starch (before friction test) | 3 | 1.75 |
| Starch (after friction test) | 3 | 0.81 |
| Cellulose acetate (Sigma-Aldrich) (before friction test) | 17.7 | 1.94 |
| Cellulose acetate (Sigma-Aldrich) (after friction test) | 11.8 | 1.11 |

From the results in Table 7, it can be found that the tensile strength of both the cotton thread to which starch paste is attached and the cotton thread to which cellulose acetate is attached significantly decreased after the friction test. However, it was found that the cotton thread to which cellulose acetate was attached had a higher tensile strength value after the friction test and a higher resistance to friction than the cotton thread to which starch paste was attached.

(Example 3: Desizing Using Supercritical Carbon Dioxide)

(1) Cotton Thread to Which Sizing Agent Is Attached

In the same manner as the sizing method using supercritical carbon dioxide described in Example 2 above, the scoured and bleached cotton thread (20 count, single thread) manufactured by IZAWA TOWEL CO., LTD. was treated to prepare a cotton thread (Sizing rate S: 15.5%) to which cellulose acetate (manufactured by Sigma-Aldrich) was attached.

(2) Apparatus and Reagents

The same apparatus and carbon dioxide supply source as in Example 1 above was used.

(3) Operation Procedure

(3-1) Batch Method

The high-pressure container was preheated to 40°C, and the cotton thread to which the cellulose acetate (manufactured by Sigma-Aldrich) was attached shown in (1) above was placed in the high-pressure container being separated from the stand made of wire not to come into contact with the stirring bar (stirrer tip). Next, acetone was placed in the high-pressure container using a liquid-feeding pump in a manner such that the ratio (% by mol) of acetone to supercritical carbon dioxide was 10% by mol. Next, carbon dioxide was fed to the high-pressure container using a liquid-feeding pump, and the inside of the high-pressure container was pressurized. The conditions for treating each cotton thread with supercritical carbon dioxide fluid were set to 40°C, 10 MPa, 60 minutes, and a batch type, and the treatment was performed while stirring the inside of the high-pressure container with a magnetic stirrer. After treatment with the supercritical carbon dioxide fluid, the valve of the high-pressure container was opened and the pressure was released to atmospheric pressure. After releasing the pressure of the high-pressure container, each cotton thread was taken out and dried under the condition of 105°C and 2 hours, and each of the dried cotton threads was weighed. Then, each of the dried cotton threads was repeatedly subjected to the same treatment with the supercritical carbon dioxide fluid 5 times in total.

(3-2) Continuous Method

The high-pressure container was preheated, and 0.2 g of the cotton thread to which the cellulose acetate (manufactured by Sigma-Aldrich) was attached shown in (1) above was placed in the high-pressure container being separated from the stand made of wire not to come into contact with the stirring bar (stirrer tip). Next, the high-pressure container was closed, and the fully automatic adjustment valve was set to a predetermined pressure. After that, carbon dioxide was fed to the high-pressure container at a predetermined flow speed using a liquid-feeding pump, and the time when the fully automatic adjustment valve started releasing pressure was taken as the starting point of the treatment. In addition, acetone feeding was started after the pressure in the high-pressure container had risen to the pressure level set by the fully automatic adjustment delivery. The time at which the fully automatic adjustment valve started to release the pressure was taken as the starting point of the treatment, similar to the liquid feeding of the carbon dioxide. After treatment with supercritical carbon dioxide fluid, the pressure of the high-pressure container was rapidly released. After releasing the pressure of the high-pressure container, each cotton thread was taken out and dried under the condition of 105°C and 2 hours, and each of the dried cotton threads was weighed.

In addition, the conditions for treating each sample with the supercritical carbon dioxide fluid, which are temperature, pressure, stirring, and flow speed, were changed as described in (i) to (iii) below, and experiments were performed.

(i) Temperature/pressure

The temperature and pressure were set to conditions such as (40°C, 10 MPa), (40°C, 20 MPa), and (100°C, 10 MPa), respectively, and supercritical treatment was performed. Carbon dioxide and acetone were fed at the setting of a flow speed of 1 ml/min and 0.2 ml/min, respectively, and supercritical treatment was performed for 5 hours.

(ii) Stirring

A stand made of wire as described above was removed and the cotton thread and stirrer were brought into contact with each other. In addition, 10 stainless steel metal balls (inch size 1/4) were placed in a high-pressure container and further stirred to perform desizing. The temperature and pressure conditions in the supercritical treatment were 40°C and 10 MPa. Carbon dioxide and acetone were fed at the setting of a flow speed of 1 ml/min and 0.2 ml/min, respectively, and supercritical treatment was performed for 5 hours.

(iii) Flow Speed

The flow speed of carbon dioxide, the flow speed of acetone, and the time of supercritical treatment are set to (5 ml/min, 1 ml/min, 60 min), (1 ml/min, 0.2 ml/min, 300 min), (0.5 ml/min, 0.1 ml/min, 600 min), respectively. The temperature and pressure conditions in the supercritical treatment were 40°C and 10 MPa.

(4) Evaluation (Sizing rate S, Removal Rate of Sizing Agent)

First, using the weight (g) of the cotton thread (the above-mentioned scoured and bleached cotton thread) before sizing and desizing treatment and the weight (g) of the cotton thread after desizing treatment, based on the above Formula (2), the Sizing rate S of cellulose acetate (sizing agent) after desizing treatment was calculated.

Then, using

Sizing rate S(%) of the sizing agent of the sizing-applied cotton thread (cotton thread after sizing treatment and cotton thread before desizing treatment) and Sizing rate S(%) of the sizing agent of the cotton thread after the above desizing treatment, based on the following Formula (3), the removal rate (desizing rate D) of the sizing agent was calculated.
[Math. 3]

$$\text{Desizing rate D (\%)} = [1 - (\text{ Sizing rate S(\%) after treatment/ Sizing rate S(\%) before treatment})] \times 100 \qquad (3)$$

In the above batch method, Sizing rate S before supercritical treatment (before desizing treatment) is $S_0$, Sizing

rate S and desizing rate D after the first treatment are $S_1$ and $DD_1$, and the second and subsequent treatments are $S_1$ to $S_5$ and $D_1$ to $D_5$, respectively.

Table 8 shows the evaluation results of the batch method, and Table 9 shows the evaluation results of the continuous method, respectively.

[Table 8]

| $S_0$ (%) | $S_1$ (%) | $D_1$ (%) | $S_2$ (%) | $D_2$ (%) | $S_3$ (%) | $D_3$ (%) | $S_4$ (%) | $D_4$ (%) | $S_5$ (%) | $D_5$ (%) |
|---|---|---|---|---|---|---|---|---|---|---|
| 15.5 | 15.8 | -1.9 | 9.7 | 37.8 | 4.1 | 74.1 | 3.0 | 81.0 | 2.8 | 82.4 |

[Table 9]

| No. | Temperature (°C) | Pressure (MPa) | Time (min) | Flow speed: $CO_2$ (ml/min) | Flow speed: acetone (ml/min) | $S_1$ (%) | $S_2$ (%) | D (%) |
|---|---|---|---|---|---|---|---|---|
| 1 | 40 | 10 | 60 | 5 | 1 | 12.3 | 10.1 | 17.7 |
| 2 | 40 | 10 | 300 | 1 | 0.2 | 14.5 | 8.1 | 43.9 |
| 3 | 40 | 20 | 300 | 1 | 0.2 | 13.4 | 8.3 | 38.3 |
| 4 | 100 | 10 | 300 | 1 | 0.2 | 13.4 | 13.1 | 2.24 |
| 5 | 40 | 10 | 300 | 1 | 0.2 | 12.3 | 3.4 | 72.4 |
| 6 | 40 | 10 | 300 | 1 | 0.2 | 21.2 | 4.0 | 81.1 |
| 7 | 40 | 10 | 800 | 0.5 | 0.1 | 19.1 | 4.6 | 75.9 |
| * No. 5: The stand in the high-pressure container is not used.<br>No. 6 and No. 7: The stand in high-pressure container is not used and metal balls are used. | | | | | | | | |

As shown in Table 8, in the batch method, almost no change in mass (change in desizing rate D) was observed in the first treatment, but the removal rate increased significantly after the second treatment, and the maximum desizing rate $D(D_5)$ of 82.4% in the fifth treatment was obtained. It was not possible to completely remove the sizing agent even after 5 times of treatment. This is probably because the cellulose constituting the cotton thread and the cellulose acetate as the sizing agent have a high affinity and are strongly bound to each other. It is considered that there is a possibility that, due to such high affinity, cellulose acetate did not dissolve much in supercritical carbon dioxide in the first treatment.

In addition, in Table 9, test No. 2 had the same temperature, pressure, and time conditions as the test of 5 times of treatment by the batch method shown in Table 8, but t desizing rate D was 43.9%, which was lower than desizing rate D (82.4%) of the batch method. This is probably because the supercritical carbon dioxide flows out of the high-pressure vessel before the cellulose acetate dissolves in the supercritical carbon dioxide due to insufficient stirring by the stirring bar in the continuous method.

In Table 9, test No. 3 had a higher pressure than test No. 2, but desizing rate D was 38.3%, which was comparable to test No. 2. From this result, it is considered that the solubility of cellulose acetate in supercritical carbon dioxide does not change even when the pressure is changed in the range of 10 to 20 MPa.

In addition, in test No. 4, although the temperature was higher than in test No. 2, desizing rate D was 2.24%, and almost no desizing was performed. This result is considered to be due to the fact that cellulose acetate shows high solubility in supercritical carbon dioxide at low temperatures.

In Table 9, test No. 5 was a test that employed the same conditions as test No. 2, removed the stand made of wire, and brought the cotton thread into contact with the stirring bar. Test No. 5 had desizing rate D of 72.4%, which was significantly higher than that of test No. 2. From this result, it is considered that the degree of physical contact with the cotton thread is significantly related to the desizing rate D in the desizing test. Based on this result, in test No. 6, a desizing test was performed by placing a stainless metal ball in the high-pressure vessel and further increasing the degree of physical contact with the cotton thread. As a result, desizing rate D was 81.1%, which was higher than that of test No. 5. From this result, it was found that the factor of physical contact with the cotton thread has a considerable influence on desizing.

In Table 9, in test No. 1 with a short treatment time and high flow speeds of supercritical carbon dioxide and acetone, desizing rate D was as low as 17.7%. Meanwhile, in test No. 2 with a long treatment time and low flow speeds, esizing rate D was 43.9%, showing a higher removal rate than No. 1. This is considered to be due to the dissolution rate

of cellulose acetate in the solvent, and this is probably because cellulose acetate, which is a polymer, has a slow dissolution rate in the solvent, and under the conditions of No. 1 where the flow rate is high, cellulose acetate was not sufficiently dissolved in the solvent, resulting in a low desizing rate D.

Test No. 7 was a test in which the treatment time was extended and the flow speed was slowed down compared to No. 6 under the conditions of using metal balls, but desizing rate D was 75.9%, which was slightly lower than that in test No. 6. From this result, in a case where the cotton thread and high-pressure container of the present example were used, under the conditions of a treatment time of 300 minutes, a flow speed of supercritical carbon dioxide of 1 ml/min, and a flow speed of acetone of 0.2 ml/min, it is considered that cellulose acetate shows high solubility in solvent.

## Claims

**1.** A method for applying a sizing agent to a textile product, the method comprising:
a step of sizing the textile product by bringing the textile product into contact with a fluid containing the sizing agent and supercritical carbon dioxide.

**2.** A method for manufacturing a sizing-applied textile product, the method comprising:
a step of sizing the textile product by bringing the textile product into contact with a fluid containing a sizing agent and supercritical carbon dioxide.

**3.** A method for removing a sizing agent from a sizing-applied textile product, the method comprising:
a step of desizing the sizing-applied textile product by bringing the sizing-applied textile product into contact with a fluid containing supercritical carbon dioxide.

**4.** A method for manufacturing a textile product from a sizing-applied textile product, the method comprising:
a step of desizing the sizing-applied textile product by bringing the sizing-applied textile product into contact with a fluid containing supercritical carbon dioxide.

**5.** The method according to any one of claims 1 to 4, wherein
the sizing agent contains cellulose acetate.

**6.** The method according to any one of claims 1 to 5, wherein
the fluid further contains a cosolvent.

**7.** The method according to claim 6, wherein
the cosolvent contains acetone.

**8.** The method according to any one of claims 1 to 7, wherein
the textile product contains cotton threads.

**9.** The method according to claim 3 or 4, wherein
the step of desizing includes bringing metal balls into contact with the sizing-applied textile product.

**10.** The method according to claim 3, 4, or 9, wherein
the step of desizing is batch processing or continuous processing.

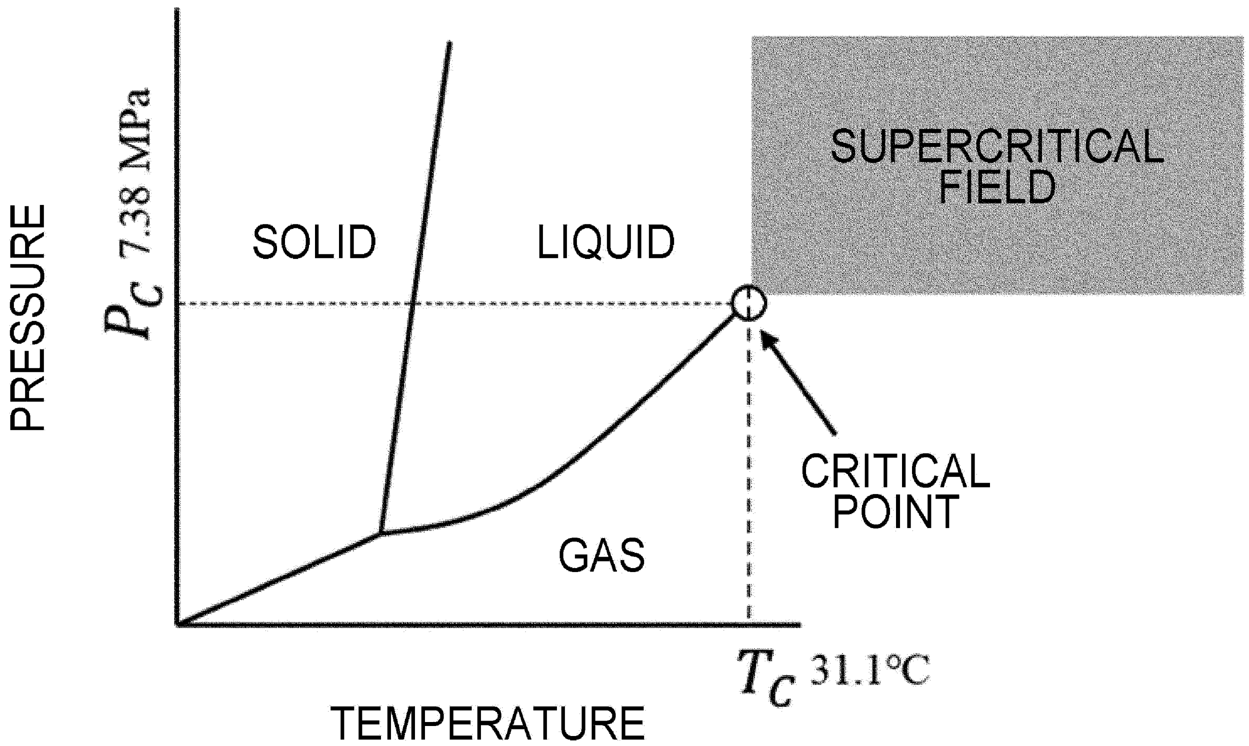
PRESSURE
$P_C$ 7.38 MPa
SOLID
LIQUID
SUPERCRITICAL FIELD
CRITICAL POINT
GAS
$T_C$ 31.1°C
TEMPERATURE

(a)

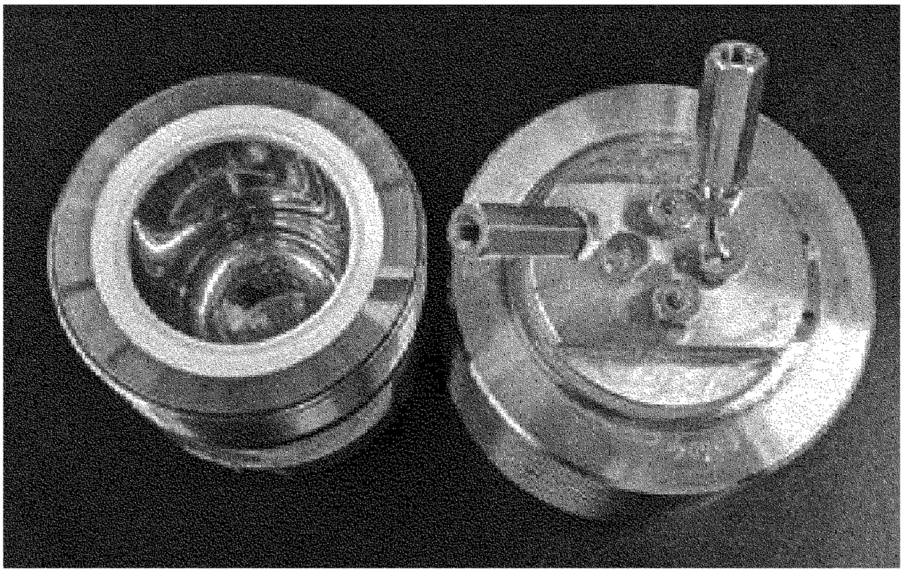

(b)

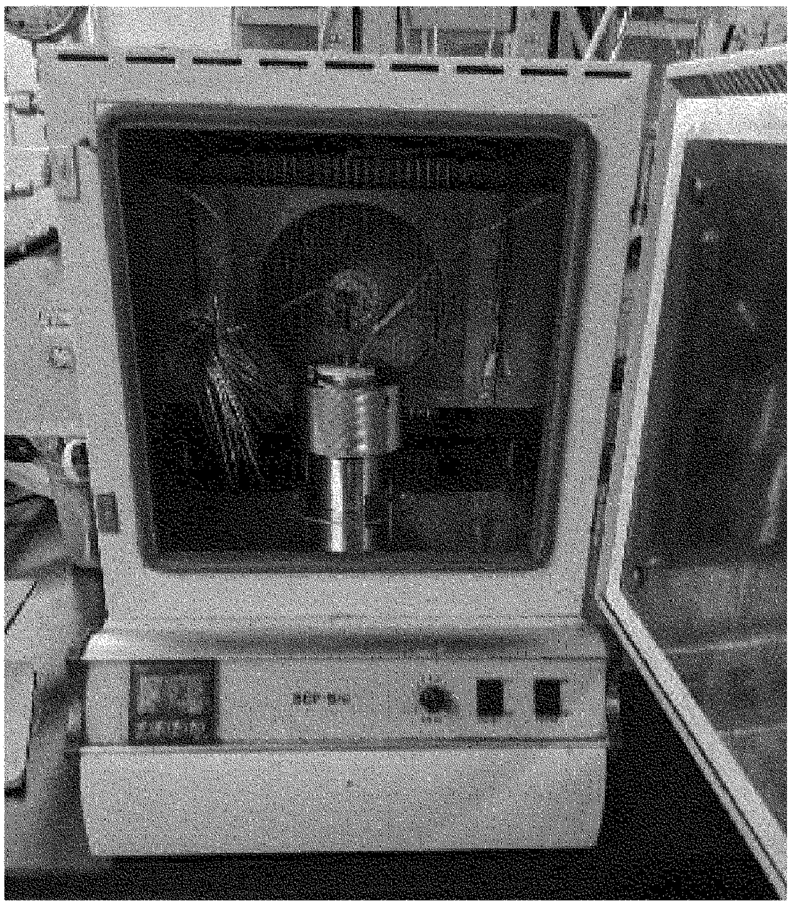

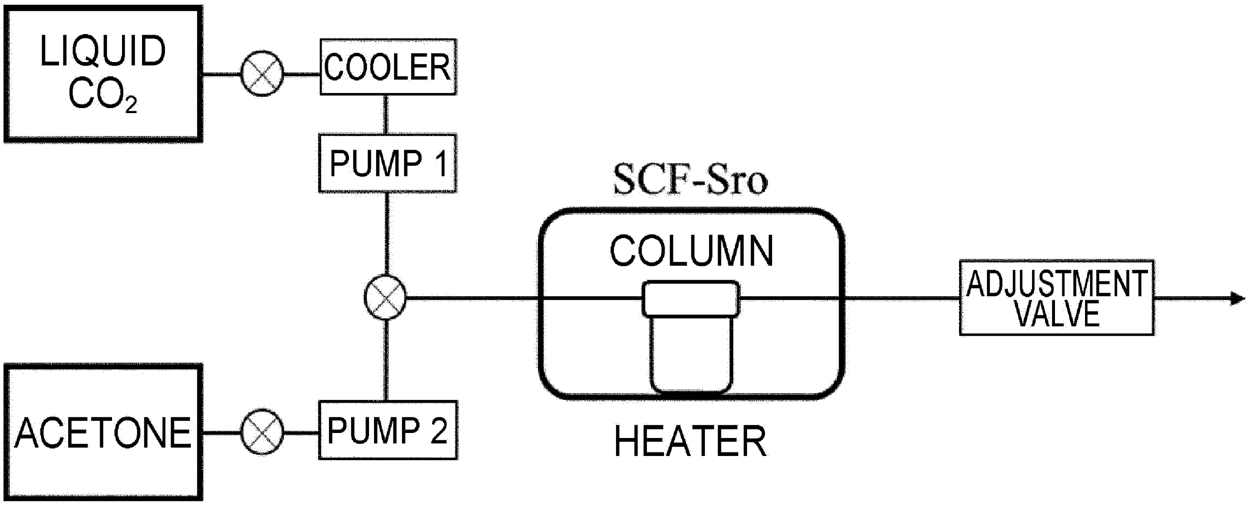
LIQUID
$CO_2$
COOLER
PUMP 1
SCF-Sro
COLUMN
ADJUSTMENT
VALVE
ACETONE
PUMP 2
HEATER

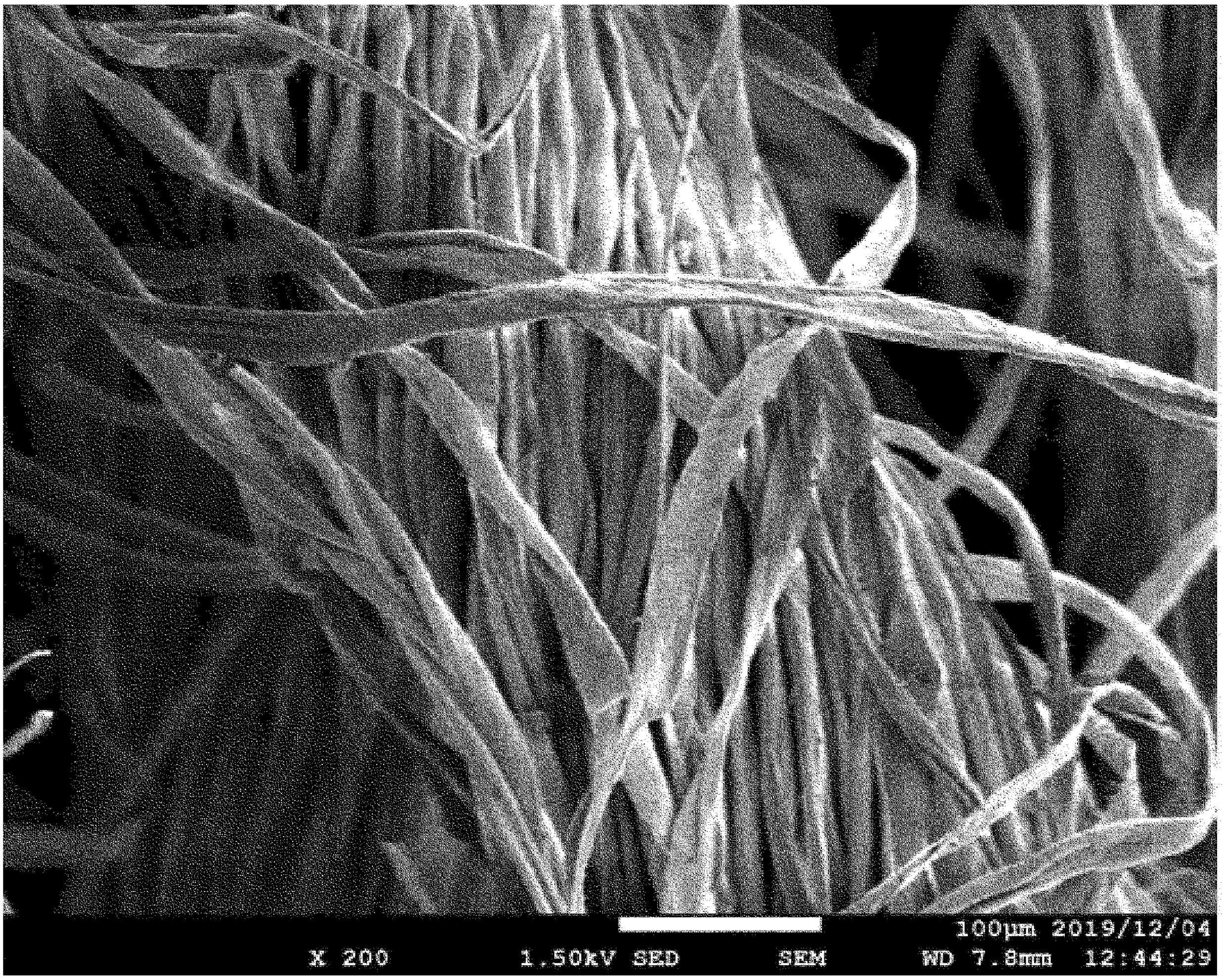
100μm 2019/12/04
X 200
1.50kV SED
SEM
WD 7.8mm
12:44:29

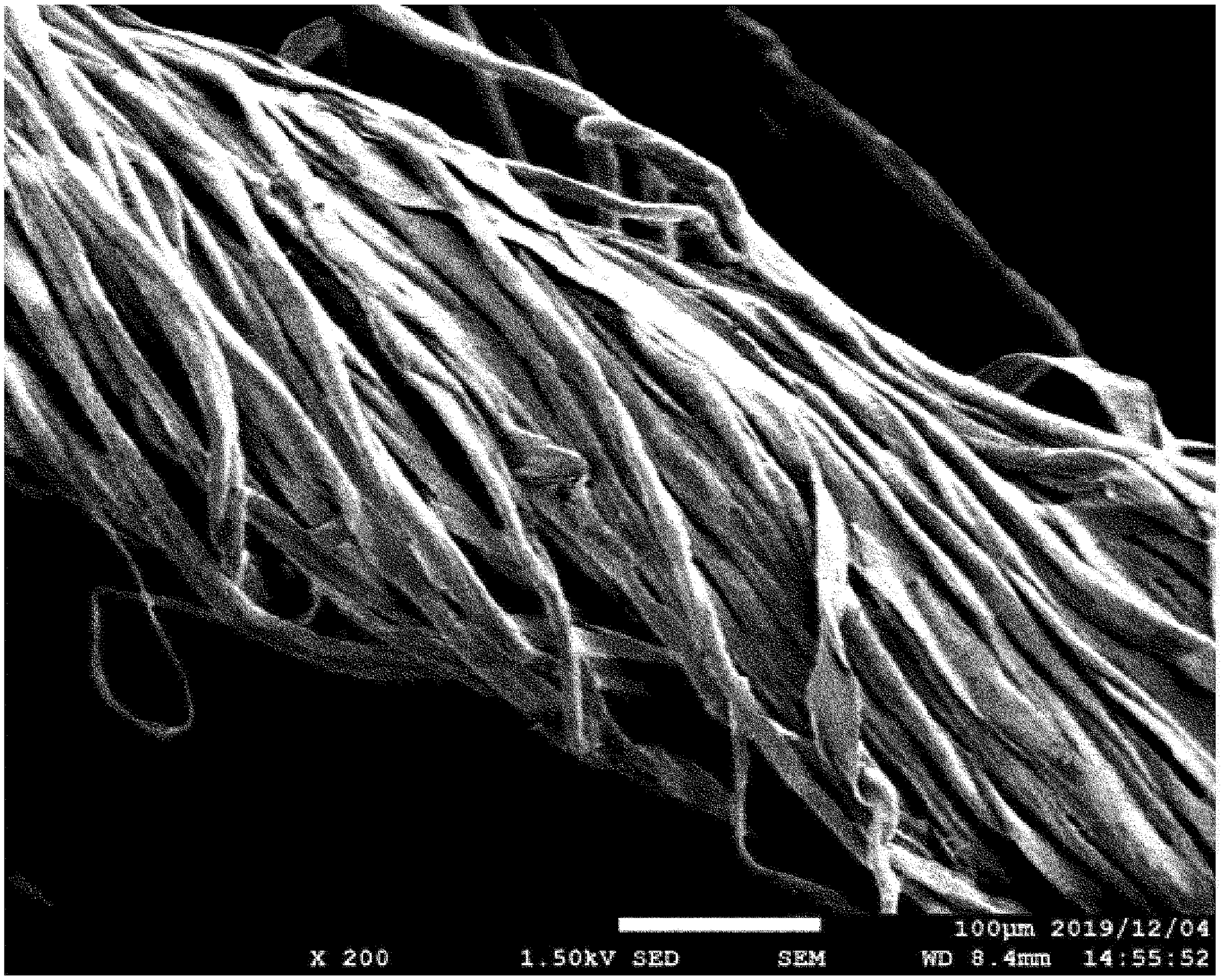
100µm 2019/12/04
X 200 1.50kV SED SEM WD 8.4mm 14:55:52

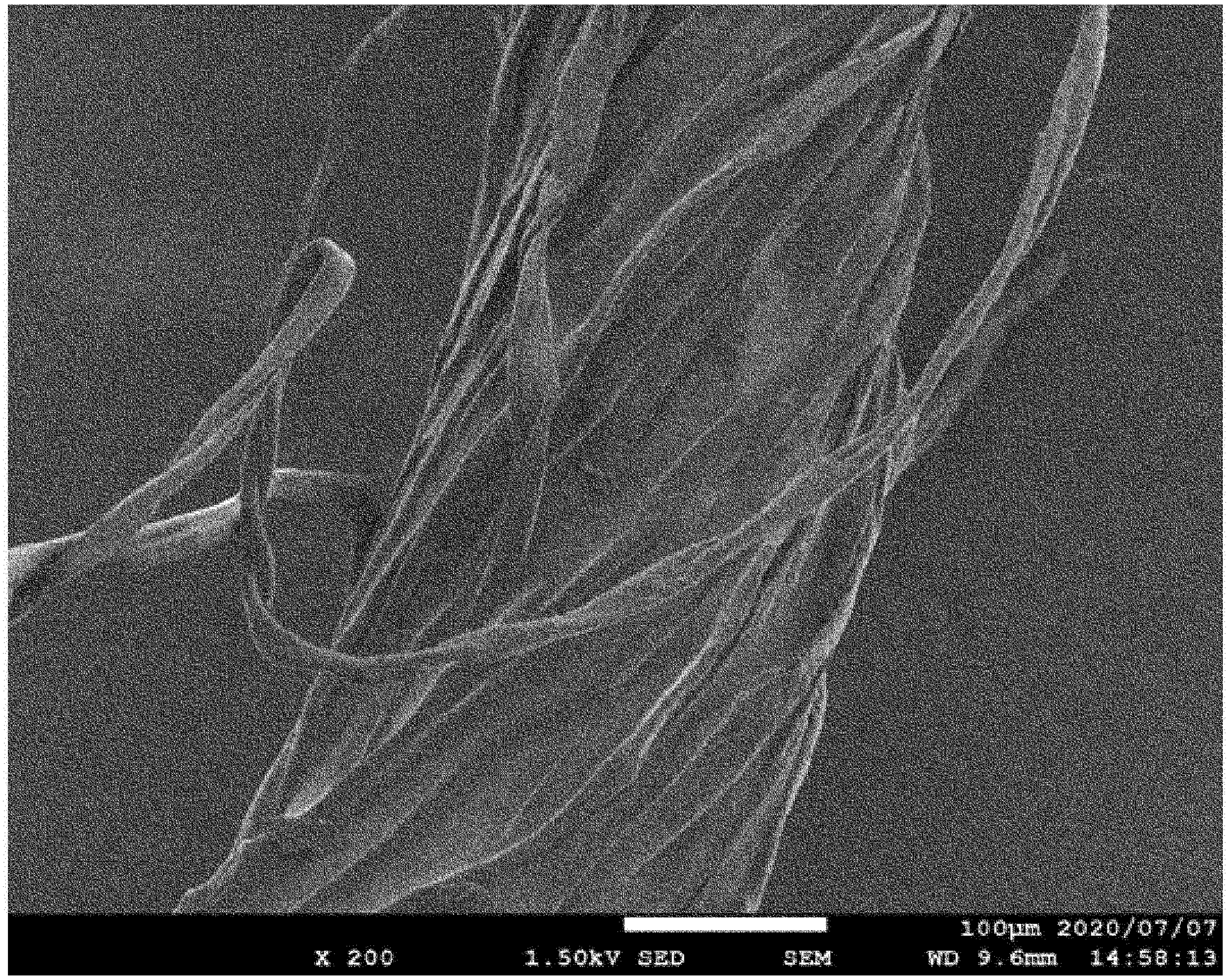
100μm 2020/07/07
X 200 1.50kV SED SEM WD 9.6mm 14:58:13

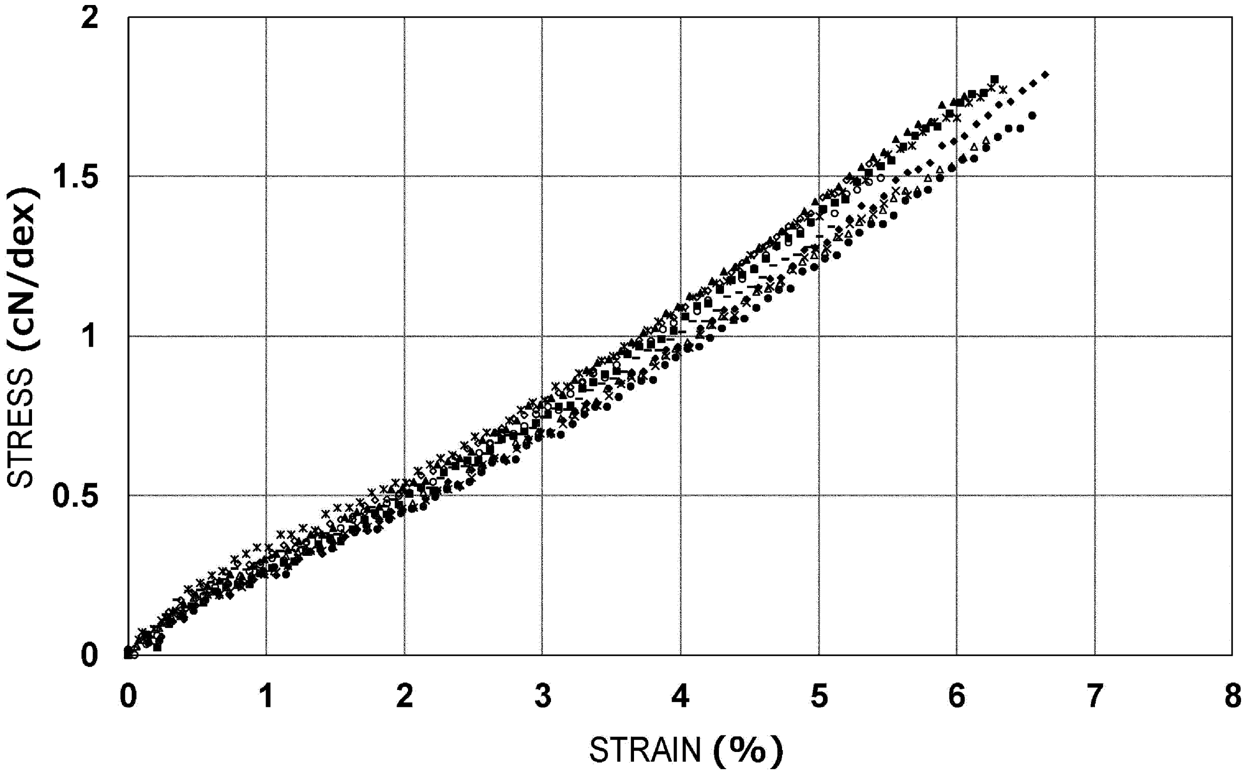


COTTON THREAD TO WHICH NO SIZING AGENT IS ATTACHED

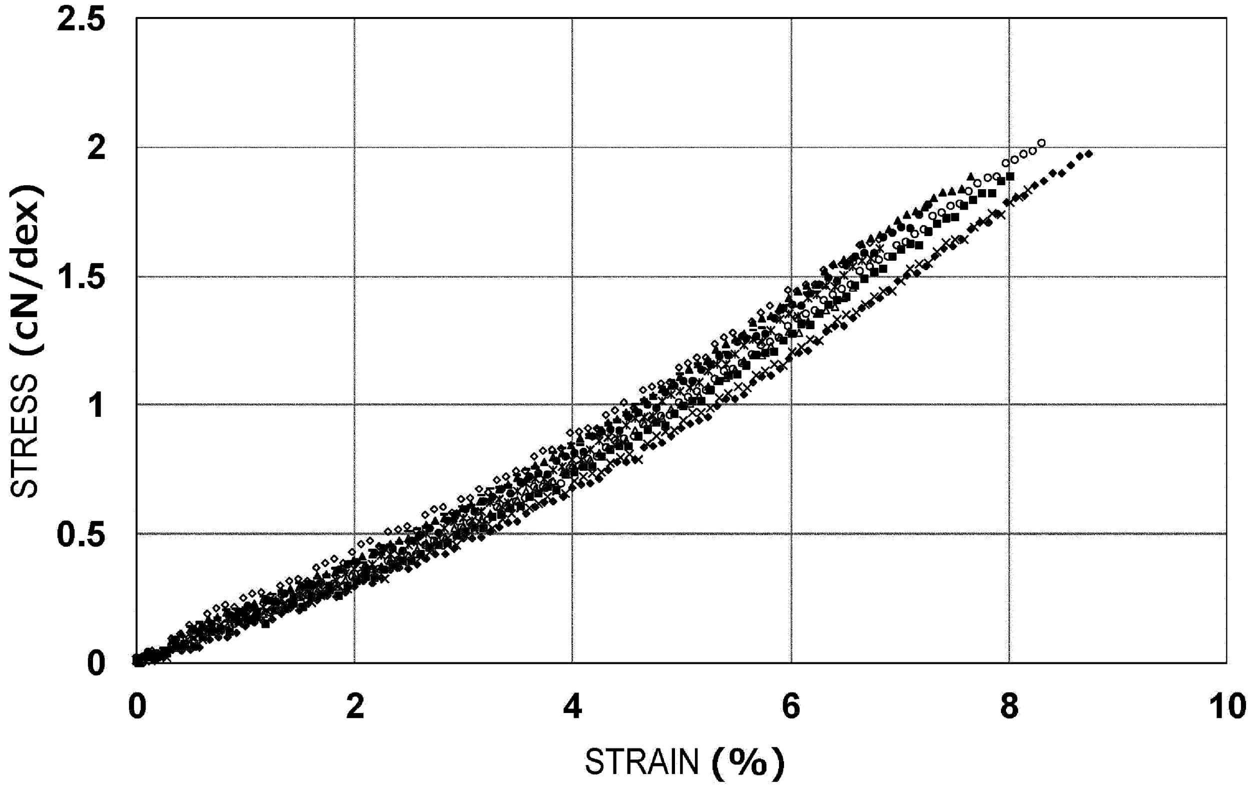


COTTON THREAD TO WHICH STARCH PASTE IS ATTACHED

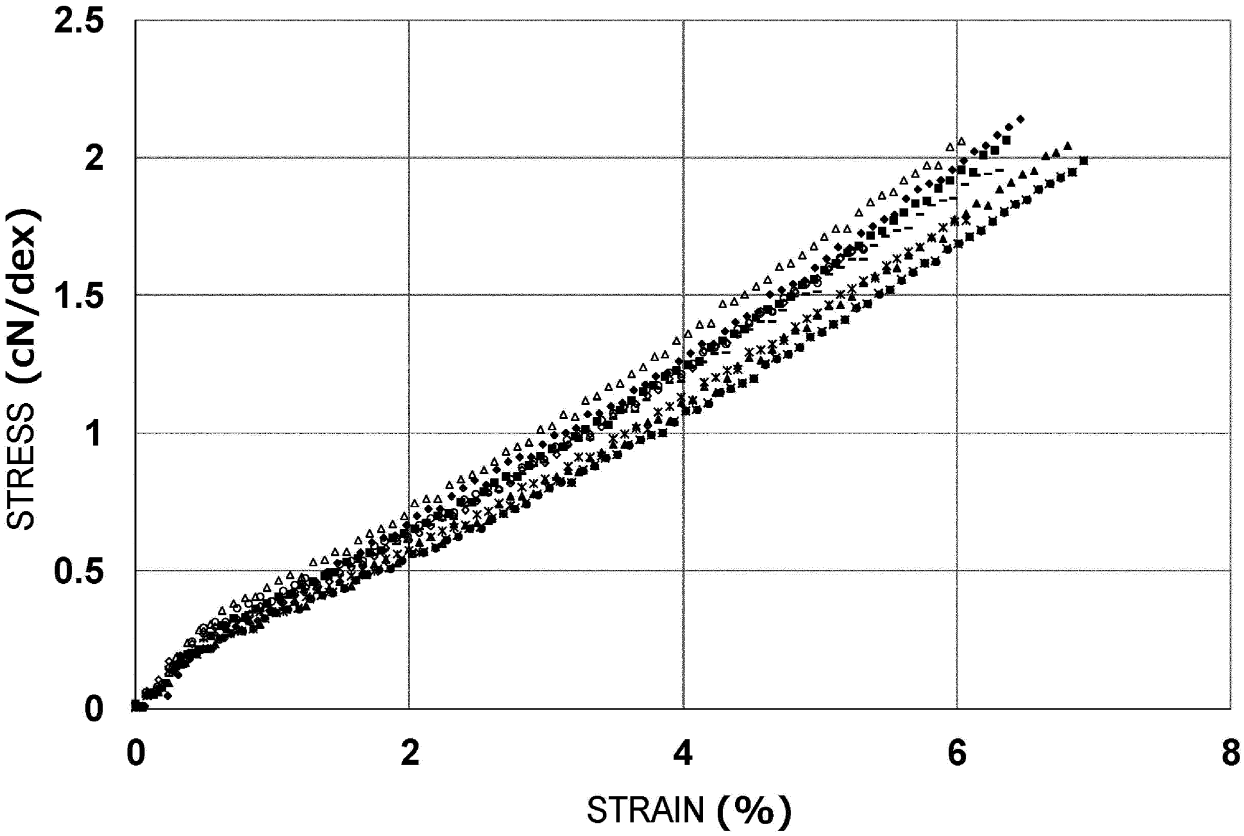


COTTON THREAD TO WHICH CELLULOSE ACETATE
(MANUFACTURED BY Sigma-Aldrich) IS ATTACHED

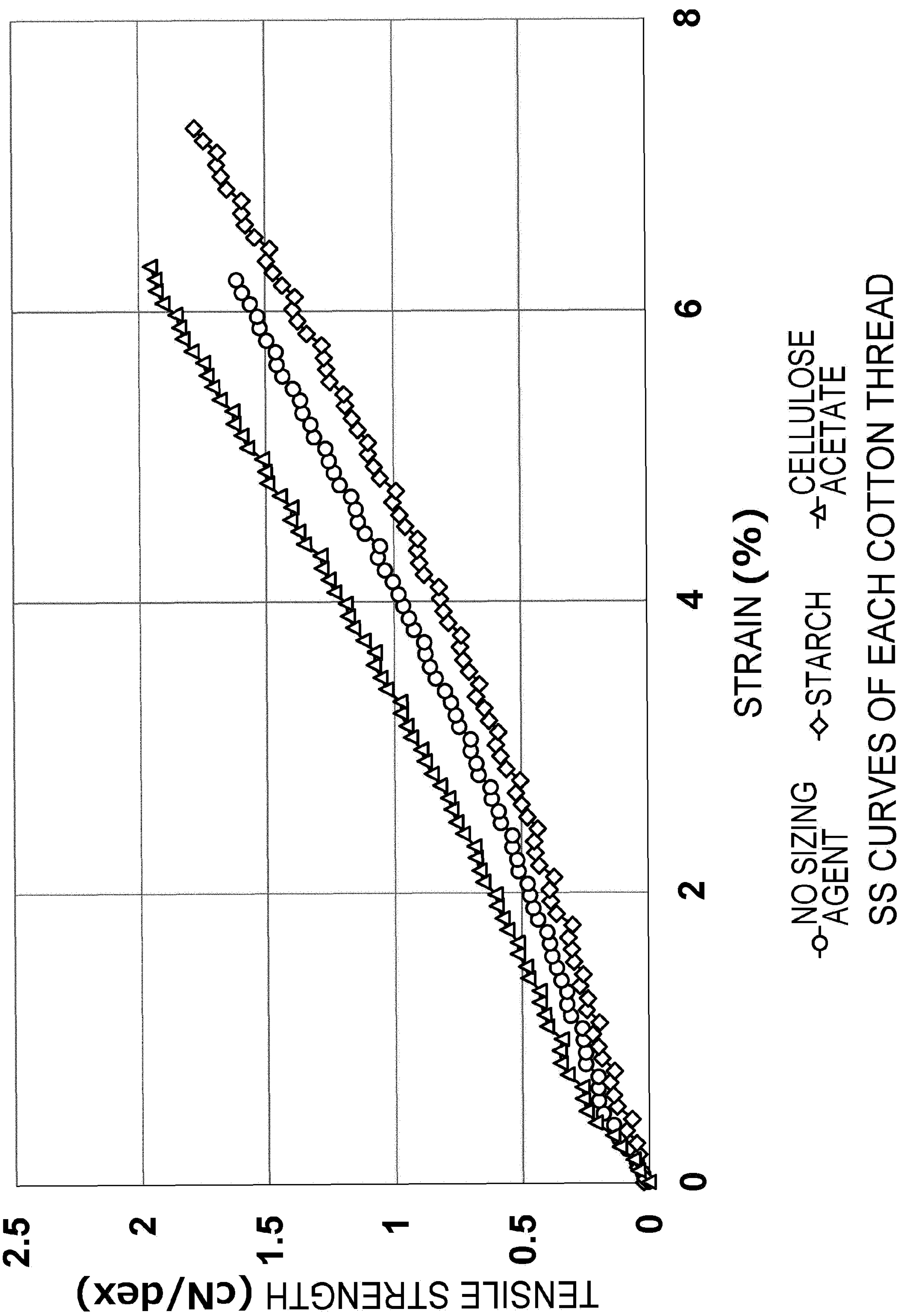
TENSILE STRENGTH (cN/dex)
0
0.5
1
1.5
2
2.5
0
2
4
6
8
STRAIN (%)
NO SIZING AGENT
STARCH
CELLULOSE ACETATE
SS CURVES OF EACH COTTON THREAD

**INTERNATIONAL SEARCH REPORT**

International application No. **PCT/JP2022/019650**

**A. CLASSIFICATION OF SUBJECT MATTER**

***D06B 1/00***(2006.01)i; ***D06L 1/00***(2017.01)i; ***D06M 15/07***(2006.01)i
FI: D06B1/00; D06L1/00; D06M15/07

According to International Patent Classification (IPC) or to both national classification and IPC

**B. FIELDS SEARCHED**

Minimum documentation searched (classification system followed by classification symbols)

D06B1/00-23/30; D06C3/00-29/00; D06G1/00-5/00; D06H1/00-7/24; D06J1/00-1/12; D06L1/00-4/75; D06M13/00-15/715

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | US 5863298 A (BATTELLE MEMORIAL INSTITUTE) 26 January 1999 (1999-01-26) claims 1, 3, column 2, lines 13-21, column 3, lines 1-9 | 1-4, 6-10<br>5 |
| A | CN 104389153 A (SOOCHOW UNIVERSITY) 04 March 2015 (2015-03-04) claims | 1-10 |
| A | JP 2002-180369 A (MITSUBISHI RAYON CO LTD) 26 June 2002 (2002-06-26) example 1, paragraph [0012] | 1-10 |
| A | WO 2012/132867 A1 (NITTO BOSEKI CO., LTD.) 04 October 2012 (2012-10-04) claims | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/019650**

| Patent document cited in search report | Publication date (day/month/year) | Patent family member(s) | Publication date (day/month/year) |
|---|---|---|---|
| US 5863298 A | 26 January 1999 | WO 1997/033033 A1 | |
| CN 104389153 A | 04 March 2015 | WO 2016/058252 A1 | |
| JP 2002-180369 A | 26 June 2002 | (Family: none) | |
| WO 2012/132867 A1 | 04 October 2012 | TW 201247963 A | |

Form PCT/ISA/210 (patent family annex) (January 2015)